# EUROPEAN PATENT SPECIFICATION

(11) **EP 2 610 472 B1**
(45) Date of publication and mention of the grant of the patent: **30.09.2015**
(21) Application number: 11819935.5
(22) Date of filing: 23.08.2011
(51) Int. Cl.: F02M 25/032, F02B 47/02, B01D 63/14

(54) **METHOD FOR REDUCING NITROGEN OXIDES IN INTERNAL COMBUSTION ENGINE AND APPARATUS THEREFOR**
VERFAHREN ZUR STICKOXIDREDUKTION IN VERBRENNUNGSMOTOREN UND VORRICHTUNG DAFÜR
PROCÉDÉ PERMETTANT DE RÉDUIRE LES OXYDES D'AZOTE DANS UN MOTEUR À COMBUSTION INTERNE ET APPAREIL ASSOCIÉ

(30) Priority: 24.08.2010 JP 2010187671
(43) Date of publication of application: 03.07.2013
(73) Proprietor: Asahi Kasei Chemicals Corporation, Tokyo 101-8101 (JP)
(72) Inventor: SHIMIZU, Atsushi, Tokyo 101-8101 (JP); OHNO, Hirokazu, Tokyo 101-8101 (JP); NIIHAMA, Tomohiro, Tokyo 101-8101 (JP); TSUKAMOTO, Masahiro, Tokyo 101-8101 (JP)
(74) Representative: D Young & Co LLP
(86) International application number: PCT/JP2011/068987
(87) International publication number: WO 2012/026472

(56) References cited:
- EP-A1- 2 484 430
- EP-A2- 1 076 169
- WO-A1-2010/137628
- WO-A2-01/11216
- GB-A- 2 139 110
- JP-A- H0 370 848
- JP-A- 2000 015 066
- JP-A- 2004 525 292
- JP-A- 2005 326 032
- US-A1- 2007 287 036

## Description

### Technical Field

The present invention relates to a method and an apparatus for reducing a nitrogen oxide in an internal combustion engine. More specifically, it relates to a method for a reducing nitrogen oxide in an exhaust gas of an internal combustion engine, an apparatus for reducing a nitrogen oxide, and an internal combustion engine system.

### Background Art

Internal combustion engines, such as diesel engines, are used in a wide variety of applications because they are superior in combustion efficiency and produce less carbon oxide. However, the exhaust gas of the internal combustion engines contains nitrogen oxides (sometimes referred to as NOx hereinafter), and restrictions on the emission of NOs are becoming more severe due to the growing awareness of environmental problems. Under such circumstances, there is a demand for a technique of efficiently removing NOx at low cost, and various approaches to reduce NOx are under investigation.

As to the specific examples of removing NOx, Patent Document 1 discloses that the feed air having water sprayed thereto is fed to an internal combustion engine to reduce NOx. Another approach is to add water to a fuel and feeding the resulting fuel as a W/O (Water/Oil) emulsion to an engine or the like.

Furthermore, there is proposed a method of reducing NOx by using a membrane. Patent Document 2 discloses a method of reducing NOx by moisturizing the supply air through a hydrophilic membrane.

WO 01/11216 A2 discloses a humidifying gas induction or supply system. Water vapor is introduced into an inlet air stream of an engine by, for example, a pervaporation process through a non-porous hydrophilic membrane.

GB 2 139 110 A discloses a water vapor exchange system in which water vapor is directly exchanged from one gas stream to another by means of a gas impervious water vapour transporting membrane positioned between the two streams.

### Patent Document

Patent Document 1: Japanese Patent Laid-Open No. 03-202668
Patent Document 2: National Publication of International Patent Application No. 2003-506656

### Summary of the Invention

### Problems to be Solved by the Invention

However, the above-described method of supplying air moisturized by water spraying to the internal combustion engine has a problem that a drop of water is likely to remain in the moisturized supply air, and even after the drop of water is removed, a small change in temperature can cause condensation of the supply air because of the saturated vapor pressure. If such air is used as supply air to the internal combustion engine, the drop of water can cause corrosion of the combustion chamber of the internal combustion engine. For example, there has been developed a moisturization method for a marine diesel engine that involves using seawater. However, this method needs to comprise a step of cleaning the supply air with fresh water to remove salts from the supply air, and therefore, the system configuration is complicated.

The method of adding water to the fuel and supplying the resulting W/O emulsion to the engine has a problem that the viscosity of the fuel increases because of the addition of water, so that the amount of water added to the fuel has to be limited.

It has been contemplated to use the above-described method of reducing NOx by using a membrane. However, according to this method, NOx cannot be sufficiently reduced. In addition, the method described in Patent Document 2 has a problem that the water in the liquid state that permeates through the hydrophilic membrane can cause corrosion of the combustion chamber of the internal combustion engine. Another problem is the difficulty of controlling the temperature and humidity of air.

As described above, there is no method or apparatus capable of controlling the temperature and humidity of air and reducing NOx in a simple manner.

The present invention has been devised in view of the circumstances described above, and an object of the present invention is to provide a method of reducing nitrogen oxides in an exhaust gas of an internal combustion engine, an apparatus for reducing nitrogen oxides, and an internal combustion engine system that can effectively reduce nitrogen oxides in the exhaust gas of the internal combustion engine in a simple manner.

### Means for Solving the Problems

As a result of earnest investigations to solve the problems described above, the inventors have found that if air is moisturized by bringing the air into contact with one surface of a steam permeable membrane while flowing liquid water along the other surface of the steam permeable membrane, where the direction of the flow of the water is opposite to the direction of the flow of the air, and the moisturized air is introduced into the internal combustion engine, a considerably larger amount of NOx than conventional can be reduced in a simple manner, and have completed the present invention.

Specifically, the present invention is as follows.
[1] A method of reducing a nitrogen oxide in an exhaust gas of an internal combustion engine, the method comprising:
   a step of moisturizing air at a pressure equal to or lower than atmospheric pressure by bringing the air into contact with one surface of a steam permeable membrane while flowing liquid water along the other surface of the steam permeable membrane, wherein the direction of the flow of the water is opposite to the direction of the flow of the air; and
   a step of introducing the moisturized air into the internal combustion engine.
[2] The method of reducing the nitrogen oxide according to [1], wherein in the step of introducing the moisturized air into the internal combustion engine, the moisturized air is compressed and introduced into the internal combustion engine.
[3] The method of reducing the nitrogen oxide according to [1] or [2], wherein in the step of moisturizing the air, a pressure of the liquid water is equal to or higher than the pressure of the air.
[4] The method of reducing the nitrogen oxide according to any one of [1] to [3], wherein the steam permeable membrane is a microporous membrane selected from the group consisting of a polyolefin-based microporous membrane, a polysulfone-based microporous membrane, a polyether sulfone-based microporous membrane and a polytetrafluoroethylene-based microporous membrane, and
   at least a part of a surface of the microporous membrane is coated with a layer having a thickness of 1 µm or less, the layer containing a perfluoro-(2,2-dimethyl-1,3-dioxole) homopolymer or a copolymer of perfluoro-(2,2-dimethyl-1,3-dioxole) and tetrafluoroethylene.
[5] The method of reducing the nitrogen oxide according to any one of [1] to [4], wherein the water contains an electrolyte.
[6] The method of reducing the nitrogen oxide according to any one of [1] to [5], wherein in the step of moisturizing the air, a temperature of the liquid water is from -10°C to +30°C of a temperature of the air.
[7] The method of reducing the nitrogen oxide according to any one of [1] to [6], wherein a content of water in the moisturized air is 1 mol% or more, and a humidity of the moisturized air is lower than 100 %RH.
[8] An apparatus for reducing a nitrogen oxide, comprising:
   a membrane module including a steam permeable membrane and a case that houses the steam permeable membrane, the case having a first section and a second section separated from each other by the steam permeable membrane, and the case having an air supply port for supplying air at a pressure equal to or lower than atmospheric pressure to the first section, an air discharge port for discharging the air from the first section, a water supply port for supplying liquid water to the second section, and a water discharge port for discharging the liquid water from the second section; and
   a water supply part connected to the water supply port of the membrane module, wherein the membrane module is configured to direct the flow of the liquid water in the opposite direction of the flow of the air.
[9] The apparatus for reducing the nitrogen oxide according to [8], the apparatus further comprising:
   an air compressing part connected to the air discharge port of the membrane module.
[10] The apparatus for reducing the nitrogen oxide according to [8] or [9], wherein the steam permeable membrane is a microporous membrane selected from the group consisting of a polyolefin-based microporous membrane, a polysulfone-based microporous membrane, a polyether sulfone-based microporous membrane and a polytetrafluoroethylene-based microporous membrane, and
   at least a part of a surface of the microporous membrane is coated with a layer having a thickness of 1 µm or less, the layer containing a copolymer of perfluoro-(2,2-dimethyl-1,3-dioxole) and tetrafluoroethylene.
[11] The apparatus for reducing the nitrogen oxide according to any one of [8] to [10], wherein the water supply part includes a liquid feeding part that supplies liquid water discharged through the water discharge port of the membrane module to the water supply port of the membrane module again.
[12] The apparatus for reducing the nitrogen oxide according to any one of [8] to [11], the apparatus further comprising:
   a temperature controlling part that controls the temperature of the liquid water; and
   a flow rate controlling part that controls the flow rate of the liquid water.
[13] An internal combustion engine system, comprising:
   the apparatus for reducing the nitrogen oxide according to any one of [9] to [12]; and
   an internal combustion engine,
   wherein the air compressing part is disposed between the air discharge port of the membrane module and the internal combustion engine.

### Brief Description of Drawings

Figure 1 shows a perspective view of one embodiment of a membrane module used in the present embodiment.
Figure 2 shows a perspective view of another embodiment of the membrane module used in the present embodiment.
Figure 3 shows a perspective view of another embodiment of the membrane module used in the present embodiment.
Figure 4 shows a conceptual view of one embodiment of a hollow fiber type membrane module used in the present embodiment.
Figure 5 shows a conceptual view of one embodiment of a flat membrane type apparatus used in the present embodiment.
Figure 6 shows a conceptual view of one embodiment of an apparatus for reducing a nitrogen oxide according to the present embodiment.
Figure 7 shows a conceptual view of another embodiment of the apparatus for reducing a nitrogen oxide according to the present embodiment.
Figure 8 shows a conceptual view of one embodiment of an internal combustion engine system according to the present embodiment.
Figure 9 shows a conceptual view of another embodiment of the internal combustion engine system according to the present embodiment.
Figure 10 shows a conceptual view of the internal combustion engine system used in Examples.
Figure 11 shows a graph of a pressure diagram for a cylinder in Example 2 and Comparative Example 1 with a heat release rate curve plotted thereon.

### Modes for Carrying Out the Invention

Hereinafter, an embodiment of the present invention (hereinafter, simply referred to as "the present embodiment.") will be described in detail with reference to the drawings when necessary. The present embodiment below is an example for describing the present invention, and the present invention will not be limited to the content below. The accompanied drawings also show an example of the embodiment, and the present embodiment will not be limited thereto. In the drawings, vertical and horizontal positional relations are based on the positional relations shown in the drawing unless otherwise specified, and the ratio of the dimension in the drawing is not limited to the ratio shown.

A method of reducing a nitrogen oxide in an internal combustion engine according to the present embodiment is a method of reducing a nitrogen oxide in the exhaust gas of the internal combustion engine and comprises a step (moisturization step) of moisturizing air at a pressure equal to or lower than atmospheric pressure by bringing the air into contact with one surface of a stream permeable membrane while flowing liquid water along the other surface of the steam permeable membrane and a step (introduction step) of introducing the moisturized air into the internal combustion engine.

Use of the moisturized air as feed air for the internal combustion engine can reduce NOx to be produced. Although the mechanism is not clear, it is presumed that NOx to be produced can be reduced because of (1) and (2) below (however, the action of the present embodiment is not limited to these).
(1) The air used for combustion contains steam. Thereby, the concentration of oxygen in the air can be reduced to suppress a combustion reaction, leading to reduction in a combustion temperature. For this reason, a side reaction to produce NOx can be suppressed.
(2) Water, which is a triatomic molecule, has a relatively high specific heat, can reduce a heat generating temperature during combustion. For this reason, a side reaction to produce NOx can be suppressed.
(3) The specific heat of the working fluid used in the internal combustion engine increases, so that the temperature during combustion decreases, and the pressure during compression also decreases. However, the pressure during combustion before ignition also decreases, so that the fuel consumption does not increase and thus can be prevented from deteriorating.

In the method of reducing the nitrogen oxide in the internal combustion engine according to the present embodiment, first, a step of moisturizing air (moisturization step) is performed by bringing air at a pressure equal to or lower than atmospheric pressure into contact with one surface of a stream permeable membrane while flowing liquid water along the other surface of the steam permeable membrane.

In the present embodiment, air at a pressure equal to or lower than atmospheric pressure is used. The air at a pressure equal to or lower than atmospheric pressure is brought into contact with one surface of the steam permeable membrane described later. In this process, the air is moisturized with the liquid water flowing along the other surface of the steam permeable membrane that permeates through the steam permeable membrane. In the present embodiment, since the air at a pressure equal to or lower than atmospheric pressure is flowed along one surface of the steam permeable membrane while liquid water is flowed along the other surface of the steam permeable membrane, the air can be efficiently and adequately moisturized while maintaining high steam permeability of the membrane. As a result, according to the present embodiment, there is no need to compress the air to be moisturized or to provide an air compressor, such as a supercharger, in the stage preceding the moisturization step. The method according to the present embodiment can adequately reduce occurrence of NOx despite its simplicity.

In the moisturization process with the steam permeable membrane, the pressure of the water is preferably equal to or slightly higher than the pressure of the air, in order to prevent the air from permeating through the steam permeable membrane to the water side and being lost. As the water is in the liquid state, the water can be flowed at a lower pressure, so that the energy and cost required for compression can be reduced. That is, using the air at a pressure equal to or lower than atmospheric pressure has an advantage that the energy and cost required for moisturization can be reduced.

Since the method according to the present embodiment is to introduce the moisturized air at a pressure equal to or lower than atmospheric pressure into the internal combustion engine, the present embodiment is also advantageous for a naturally aspirated engine that does not compress air or an operation at a low load in which a supercharger is not activated. Furthermore, since the air at a pressure equal to or lower than atmospheric pressure is brought into contact with the steam permeable membrane for moisturization, the steam permeable membrane and the apparatus having the steam permeable membrane do not have to have a specially high pressure resistance or heat resistance and therefore can be performed with simple structures. Furthermore, in general, since there is only a limited space around the engine, the smaller sizes of the steam permeable membrane and the apparatus having the steam permeable membrane are significantly advantageous. Furthermore, there is another advantage that the flexibility of the choice of materials or the like of the steam permeable membrane and the apparatus having the steam permeable membrane increases.

The air may be at any pressure equal to or lower than atmospheric pressure. However, from the viewpoint of reducing the energy required to supply the air, the pressure of the air is preferably equal to or higher than -50 kPa and equal to or lower than atmospheric pressure (0 kPa), more preferably equal to or higher than -20 kPa and equal to or lower than atmospheric pressure, and still more preferably equal to or higher than -10 kPa and equal to or lower than atmospheric pressure.

The components of the air used and the concentrations thereof are not particularly limited. For example, the concentrations of the components, such as oxygen, nitrogen, carbon dioxide and carbon monoxide are not particularly limited, and composition-controlled air formed by mixing the atmosphere with the exhaust gas can also be used, for example.

The method of reducing the nitrogen oxide according to the present embodiment moisturizes the air through the steam permeable membrane and therefore can prevent the moisturized air from containing a drop of water. From the viewpoint of preventing condensation of the moisturized air caused by a small temperature change, the humidity of the moisturized air is preferably lower than 100%RH and more preferably equal to or lower than 95%RH. In the method of reducing the nitrogen oxide according to the present embodiment, the humidity of the air to be moisturized through the steam permeable membrane can be precisely controlled by adjusting the temperature and the flow rate of the flow of water.

In the conventional method investigated so far that involves spraying water to moisturize air, it is difficult to remove the drops of water in the moisturized air and to control the humidity as desired. To the contrary, the method according to the present embodiment can prevent occurrence of a drop of water and easily control the humidity to a desired value, thereby preventing condensation of the moisturized air caused by a small temperature change. Furthermore, in general, in the case where the moisturization is achieved by spraying seawater, cleaning with fresh water is needed to demineralize the moisturized air. However, in the method according to the present embodiment, even if seawater is used for moisturization, the steam permeable membrane blocks the salts, so that demineralization of the moisturized air is not necessary. Thus, the method according to the present embodiment is highly reliable and stable.

In the method of reducing the nitrogen oxide according to the present embodiment, since the steam permeable membrane is used for moisturization, the water flowed may be seawater or water containing electrolytes, in particular, sodium chloride. As a method for moisturizing feed air for an internal combustion engine, the SAM method (Sweep Air Moisturizing) is known. The method is a method mainly used to reduce nitrogen oxides emitted from marine diesel engines, in which the feed air is moisturized by sea water and then subjected to a desalinating step of treating the feed air by fresh water to remove sea water mist contained in the feed air. In the case where the desalinating is not completely performed, salt invades the internal combustion engine, and causes breakdown of the internal combustion engine. Accordingly, the desalinating needs to be fully performed. To the contrary, in the method of reducing the nitrogen oxide according to the present embodiment, since the steam permeable membrane is used for moisturization, and no water in the liquid state permeates through the steam permeable membrane, no salts enter the air to be moisturized (that is, the air to be moisturized is not mixed with salts). Therefore, not only highly demineralized water but also roughly demineralized water and seawater can be used for moisturization. Even in the case where seawater is used, no demineralization step is needed. Nitrogen oxides in the internal combustion engine can be reduced with an extremely simple structure.

The steam permeable membrane used in the present embodiment may be any membrane that at least allows moisturization of air. Specifically, the steam permeable membrane is a membrane at least having such properties as to block water in the liquid state and permit passage of steam. The structure and material of the steam permeable membrane are not particularly limited, and any suitable structure and material can be chosen depending on the application or use environment. Any steam permeable membrane of any kind that has the properties described above can be used, and a hydrophobic microporous membrane or a gas permeable membrane can be used, for example.

The hydrophobic microporous membrane is a microporous membrane having hydrophobicity, which does not permeate liquid water but permeates steam. "Being hydrophobic" referred to herein means that the water absorption of the relevant polymer is equal to or lower than 0.5 % by mass. The water absorption is preferably equal to or lower than 0.1 % by mass, more preferably equal to or lower than 0.05 % by mass and still more preferably equal to or lower than 0.01 % by mass. The water absorption of a polymer can be measured by the method described in Examples described later.

The pores of the hydrophobic microporous membrane preferably have such sizes as to block water in the liquid state but permit passage of steam owing to the material (e.g. resin) of the microporous membrane rejecting water in the liquid state. In particular, the hydrophobic microporous membrane having minute pores having a ratio of the oxygen permeation rate to the nitrogen permeation rate (oxygen permeation rate/nitrogen permeation rate) of 1 or less is preferable.

The ratio of the oxygen permeation rate to the nitrogen permeation rate is the ratio of the amount of oxygen permeating per unit time through unit area under unit pressure (GPU = 10⁻⁶ cm³ (STP)/cm²/s/cmHg, for example) to the amount of nitrogen permeating per unit time through unit area under unit pressure.

A specific measurement method will be described below. The membrane is cut into a circle having a diameter of 47 mm, and the circular membrane is fixed to a stainless holder (KS-47F holder manufactured by ADVANTEC CO. LTD.,). Oxygen of a purity of 99.9 % or higher or nitrogen of a purity of 99.9 % or higher is compressed under a predetermined pressure on the primary side of the holder. It is checked with an oxygen analyzer that 99 % or more of the atmosphere on the secondary side is replaced with oxygen or nitrogen, and then the amount of the permeate gas is measured with a soap-film flow meter. From the amount of the permeate gas, the atmospheric temperature and the atmospheric pressure, the gas permeation rate in the normal state is calculated (gas permeation unit (GPU) = 10⁻⁶ cm³ (STP)/cm²·sec·cmHg), and then, the oxygen permeation rate/nitrogen permeation rate can be determined from the ratio between the gas permeation rates of oxygen and nitrogen.

The hydrophobic microporous membrane is not limited to any particular kind and can be a fluororesin-based microporous membrane or other various well-known microporous membranes, such as a polyvinylidene fluoride (PVDF)-based microporous membrane, a polytetrafluoroethylene (PTFE)-based microporous membrane, a polyimide-based microporous membrane, a polyolefin-based microporous membrane, a polysulfone-based microporous membrane and a polyether sulfone-based microporous membrane. As an alternative, a polysulfone-based microporous membrane and a polyether sulfone-based microporous membrane used as an ultrafiltration membrane (UF membrane) can also be used.

A "gas permeable membrane" refers to a membrane that substantially has no pores through which gas can pass as it is and permits permeation of gas solved or dispersed in the membrane. The gas permeable membrane is not limited to any particular kind and may be an organic polymer-based or inorganic polymer-based membrane. In the present embodiment, the gas permeable membrane preferably has an oxygen permeation rate/nitrogen permeation rate of 1 or greater.

In particular, the organic polymer-based gas permeable membrane is preferably a gas permeable membrane made of a hydrophobic organic polymer. The meaning of "being hydrophobic" referred to here has already been described above. The organic polymer-based gas permeable membrane can be a fluororesin-based gas permeable membrane, a polyimide-based gas permeable membrane or a silicone-based gas permeable membrane, for example.
Among them, the fluororesin-based gas permeable membrane and the polyimide-based gas permeable membrane are preferable because of their high steam permeation rates, and the fluororesin-based gas permeable membrane is particularly preferable.

As fluororesin-based gas permeable membranes, a membrane made of an amorphous fluorine-containing polymer is particularly preferable. The amorphous fluorine-containing polymer may be a polymer having a fluorine-containing alicyclic structure in a main chain thereof, for example. Examples of monomers capable of forming a polymer having a fluorine-containing alicyclic structure in the main chain may include monomers having a fluorine-containing alicyclic structure, the monomers including perfluoro-(2,2-dimethyl-1,3-dioxole) (PDD), perfluoro-(2-methyl-1,3-dioxole), perfluoro-(2-ethyl-2-propyl-1,3-dioxole), perfluoro-(2,2-dimethyl-4-methyl-1,3-dioxole), perfluoro dioxoles, perfluoro dioxole compounds having a fluorine-substituted alkyl group, such as a trifluoromethyl group, a pentafluoroethyl group and a heptafluoropropyl group, perfluoro-(4-methyl-2-methylene-1,3-dioxolane) (MMD), and perfluoro-(2-methyl-1,4-dioxin).

Other monomers including tetrafluoroethylene (TFE), chlorotrifluoroethylene and perfluoro (methyl vinyl ether) may also be used. A polymer having a fluorine-containing alicyclic structure in the main chain can also be used. Monomers of one or more of the kinds described above are polymerized to form a fluorine-based polymer compound that can be used for the gas permeable membrane. The fluorine-based polymer compound can be a commercially available polymer compound, such as "Teflon (registered trademark) AF 1600" manufactured by Du Pont, "Teflon (registered trademark) AF 2400" manufactured by Du Pont and "HYFLON AD" manufactured by Ausimont. The water contact angle of the surface of the steam permeable membrane is preferably equal to or greater than 90°, more preferably equal to or greater than 95° and still more preferably equal to or greater than 100°. The water contact angle can be measured by the method described in Examples described later.

Examples of the inorganic polymer-based gas permeable membrane may include a silicon nitride-based gas permeable membrane, and a carbon-based gas permeable membrane. The steam permeable membrane described above (sometimes referred to simply as a membrane, hereinafter) may have a support layer. The support layer can enhance the mechanical strength of the membrane. The support layer may be made of any of various materials that allow the membrane to serve the moisturization function. For example, a woven fabric membrane, a non-woven fabric membrane or a microporous membrane can be used as the support layer. Examples of the microporous membrane used as the support layer may include a polyimide-based microporous membrane, a PVDF-based microporous membrane, a PTFE-based microporous membrane, a polyolefin-based microporous membrane, and a polysulfone-based microporous membrane and a polyether sulfone-based microporous membrane used as an ultrafiltration membrane (UF membrane), for example. In the case where the microporous membrane used as the support layer is a flat membrane, the membrane may be formed on the support layer, for example. In the case where the microporous membrane used as the support layer is a hollow fiber membrane, the membrane may be formed on the inner surface or outer surface of the hollow fiber membrane forming the support layer.

In the case of a polyimide-based membrane, other examples of the membrane having the support layer may include a membrane having an asymmetric structure in which the membrane itself is formed by a wet method. In the case of the inorganic gas permeable membrane, examples thereof may include those in which a gas permeable membrane is formed by hydrothermal synthesis on the support layer formed with a ceramic membrane, and those formed as a thin film by chemical vapor deposition (CVD).

The thinner the steam permeable membrane, the higher the steam permeation capability of the membrane becomes. From the viewpoint of the strength and the steam permeation capability, it is preferred that the steam permeable membrane is a microporous membrane made primarily of a fluorine-based resin; and a microporous membrane having a surface at least partially covered with a layer of PDD homopolymer or a copolymer of PDD and TFE, the layer having a thickness of 1 µm or less. Among these, it is more preferable that the steam permeable membrane is a microporous membrane selected from the group consisting of a polyolefin-based microporous membrane, a polysulfone-based microporous membrane, a polyether sulfone-based microporous membrane and a polytetrafluoroethylene (PTFE)-based microporous membrane and that the steam permeable membrane having a surface at least partially covered with a layer containing a copolymer of PDD and TFE, the layer having a thickness of 1 µm or less. Although it is enough that the surface of the polyolefin-based microporous membrane, the polysulfone-based microporous membrane, the polyether sulfone-based microporous membrane or the polytetrafluoroethylene-based microporous membrane described above is partially covered with a layer containing a PDD polymer or a copolymer of PFF and TFE, the layer preferably covers the part of the surface of the membrane that is to come into contact with the air to be treated. The microporous membrane described above has a large number of small pores, and the flow of gas permeating the microporous membrane is a Knudsen flow. Thus, the microporous membrane has an oxygen permeation rate/nitrogen permeation rate of 1 or less and high durability and therefore is preferable as the support layer.

The layer covering the microporous membrane is preferably a layer containing PDD homopolymer or a copolymer of PDD and TFE, and more preferably a layer composed of PDD homopolymer or a copolymer of PDD and TFE. The PDD homopolymer and the copolymer of PDD and TFE are preferable because of their high gas permeation rates.
The mass ratio between PDD and TFE in the (co)polymer is preferably from 100/0 to 1/99, more preferably from 100/0 to 20/80. Furthermore, since the steam permeable membrane has no through-hole, the steam permeable membrane has an advantage that the risk of permeation of water in the liquid state through the steam permeable membrane can be prevented even after being used for a long time.

In the present embodiment, air is moisturized by flowing liquid water along the steam permeable membrane. Therefore, the humidity of the moisturized air can be easily controlled by adjusting the flow rate and temperature of the water in accordance with the capability of the steam permeable membrane. In addition, since the liquid water is flowing, substance exchange and heat exchange efficiently occur, so that the air can be moisturized or heated with a small amount of energy.

In the case where the steam permeable membrane is used for moisturization, the water used for moisturization is not particularly limited, and pure water, clean water, reclaimed water or water containing contaminants, such as ions and fine particles, may be used. The water used in the present embodiment can achieve an excellent moisturization effect even if the water contains electrolytes. For example, even water containing sodium chloride (seawater, for example) can be used to achieve an excellent moisturization effect. In particular, if the steam permeable membrane is made of an organic polymer having no ionic functional group, the steam permeable membrane can effectively prevents leakage of the contaminants to the air supply side and therefore can achieve more clean moisturization.

The water used in the present embodiment is liquid. The direction of the flow of the water is opposite to the direction of the flow of the air. From the viewpoint of efficiently transferring the thermal energy of the water to the air, the direction of the flow of the water is opposite to the direction of the flow of the air.

As for the relationship between the pressure of the air (air pressure) and the pressure of the water (water pressure), the water pressure is preferably equal to or higher than the air pressure. Since the air and the water is separated by the steam permeable membrane, if the water pressure is set to be higher than the air pressure, permeation of the air through the steam permeable membrane can be prevented, thereby reducing the loss of air volume and energy. In the actual operation, the pressure of the flowing water is preferably maintained to be equal to or higher than the pressure of the air to be moisturized. To this end, it is preferred that the pressure of the air supplied to the membrane module in which moisturization occurs and/or the air discharged from the membrane module measured at the front and/or rear of the membrane module, and the water pressure is adjusted to be higher than the air pressure (which is equal to or lower than atmospheric pressure).

By flowing the water, a constant amount of heat can be supplied to the air, thereby facilitating control of the humidity and temperature of the air. The temperature of the water flowed is preferably set to fall within a range of -10°C to +30°C based on the temperature of the air supplied to the membrane module. By having the temperature within the range, the air can be more efficiently moisturized, and NOx can be more efficiently reduced.

In the method of reducing the nitrogen oxide according to the present embodiment, moisturized air having a humidity of 50 %RH or higher can be obtained. The humidity of the moisturized air is preferably equal to or higher than 70 %RH, more preferably equal to or higher than 80 %RH and still more preferably equal to or higher than 90 %RH. If the air having such a humidity is used for operation of the internal combustion engine, the content of NOx in the exhaust gas of the internal combustion engine can be considerably reduced. The moisturized air is also required to have such a humidity as to avoid condensation of the moisturized air, and the humidity is preferably lower than 100 %RH or more preferably equal to or lower than 95 %RH. If this requirement is satisfied, condensation of the moisturized air caused by a small temperature change can be prevented.

According to the method of reducing the nitrogen oxide according to the present embodiment, the water content of the moisturized air is preferably equal to or higher than 1 mol%. The larger the amount of water molecules in the moisturized air, the more effectively the occurrence of NOx in the internal combustion engine can be prevented, so that the moisturized air preferably contains a large amount of water molecules. The water content of the moisturized air is more preferably equal to or higher than 3 mol%, still more preferably equal to or higher than 6 mol%, still further more preferably equal to or higher than 9 %RH, and still further more preferably equal to or higher than 10 mol%.

The upper limit of the water content is preferably such that the humidity does not exceed the upper limit described above. If the water content increases at a temperature, the water vapor pressure increases, and the humidity (%RH), which is the ratio of the vapor pressure to the saturated vapor pressure, also increases. Therefore, at the operating temperature of the internal combustion engine, the water content is preferably adjusted so as to make the humidity lower than 100 %RH. Thus, the water content that provides a humidity lower than 100 %RH is preferable, although the upper limit of the water content varies with the temperature of the moisturized air.

In the present embodiment, the water can be circulated. The water contains a small or large amount of salts, and the concentration of the salts increases as the moisturization through the steam permeable membrane occurs and the water evaporates. In the case where the water is circulated, the salt-concentrated water is preferably continuously or regularly discharged from the system. Specifically, a water supply part (water tank or the like) described later is provided with a drain outlet, and the salt-concentrated water can be discharged through the drain outlet to keep the concentration of salts in the circulating water constant. In the case where the water is not circulated, the water discharged from the membrane module is preferably discharged from the system after heat recovery with a heat exchanger.

The method of reducing the nitrogen oxide in the internal combustion engine according to the present embodiment includes the step (introduction step) of introducing the moisturized air produced in the moisturization step described above into the internal combustion engine.

In general, in many internal combustion engines, air is compressed before the air is introduced into the combustion chamber. Therefore, in the present embodiment, the moisturized air is preferably compressed in the introduction step. In particular, in the present embodiment, the moisturized air is preferably compressed with a compressor of a supercharger connected to the internal combustion engine. Since the compressor of the supercharger takes air in when compressing the moisturized air, the pressure of the air can be efficiently reduced to a pressure equal to or lower than atmospheric pressure prior to the entrance to the compressor of the supercharger. Thus, if the steam permeable membrane is installed at an appropriate position before the compressor of the supercharger, air at a pressure equal to or lower than atmospheric pressure can be more efficiently brought into contact with the surface of the steam permeable membrane. In addition, when the air is compressed, the temperature of the moisturized air increases as a result of adiabatic compression, so that condensation of the water vapor in the supply air can be prevented. The air having exited the compressor of the supercharger has typically been sufficiently increased in temperature and is supplied to the engine after the temperature is adjusted by an intercooler to an appropriate temperature that prevents condensation of water vapor. The compression is preferably achieved with the energy of the exhaust gas discharged from the internal combustion engine recovered with a turbine or is preferably mechanically achieved with the shaft power of the engine. The compression pressure is set appropriately for the internal combustion engine.

Next, an apparatus for reducing a nitrogen oxide according to the present embodiment will be described.

The apparatus for reducing the nitrogen oxide according to the present embodiment comprises a steam permeable membrane and a case that houses the steam permeable membrane, the case has a first section and a second section separated from each other by the steam permeable membrane, and the case comprises a membrane module having an air supply port for supplying air into the first section, an air discharge port for discharging the air from the first section, a water supply port for supplying liquid water into the second section, and a water discharge port for discharging the liquid water from the second section, and a water supply part connected to the water supply port of the membrane module, where the membrane module is configured to direct the flow of the liquid water in the opposite direction of the flow of the air. In the present embodiment, air moisturized by the membrane module is supplied to a combustion chamber of an internal combustion engine. Thereby, the content of NOx in the exhaust gas discharged from the internal combustion engine can be considerably reduced.

The membrane module comprises a steam permeable membrane and a case that houses the steam permeable membrane, the case having a first section and a second section separated from each other by the steam permeable membrane, and the case having an air supply port for supplying air into the first section, an air discharge port for discharging the air from the first section, a water supply port for supplying liquid water into the second section, and a water discharge port for discharging the liquid water from the second section. With the membrane module configured as described above, air and water are separated from each other by the membrane and do not come into direct contact with each other, so that contamination of the air by the impurities contained in the water, such as water-soluble substances, water-dispersible substances and ionic substances, can be more effectively prevented.

The membrane module is an apparatus (module) having the steam permeable membrane. The first section of the membrane module has the air supply port that is an opening through which air is supplied, and the air discharge port that is an opening through which air moisturized through the steam permeable membrane is discharged. The first section is a space through which air flows. The second section of the membrane module has the water supply port and the water discharge port, which are openings through which water flows. The second section is a space through which water flows. The number of the openings is not particularly limited, and any number of openings can be provided depending on the use conditions of the membrane module.

The form of the membrane module is not particularly limited, and a hollow fiber membrane module and a flat membrane module may be used. For example, a plate and frame type membrane module, a pleated type membrane module based on the flat membrane, a hollow fiber type membrane module, and a tubular type membrane module may be used, for example. The forms of the pleated type membrane module may include pleats overlaid one on another into a box-like shape or rolled into a cylindrical shape.

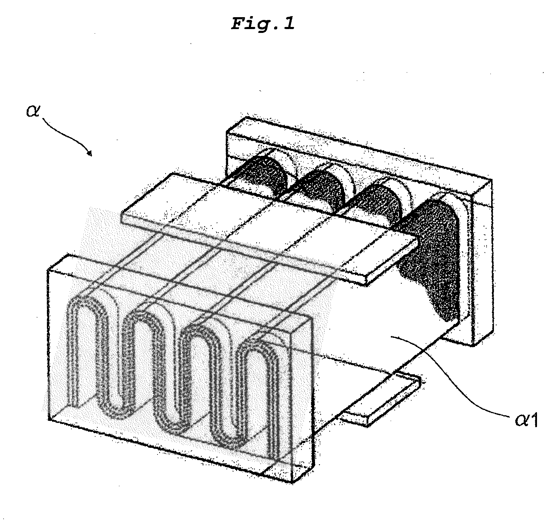

Figure 1 shows a perspective view of one embodiment of the membrane module according to the present embodiment. A membrane module α is a membrane module comprising pleats overlaid one on another into a box-like shape. A steam permeable membrane α1 is folded back several times like bellows and has a plurality of pleats formed by the crest parts and the trough parts overlaid one on another. The pleated structure in which the crest parts and the trough parts are repeatedly formed at regular intervals provides an increased contact area and is efficient.

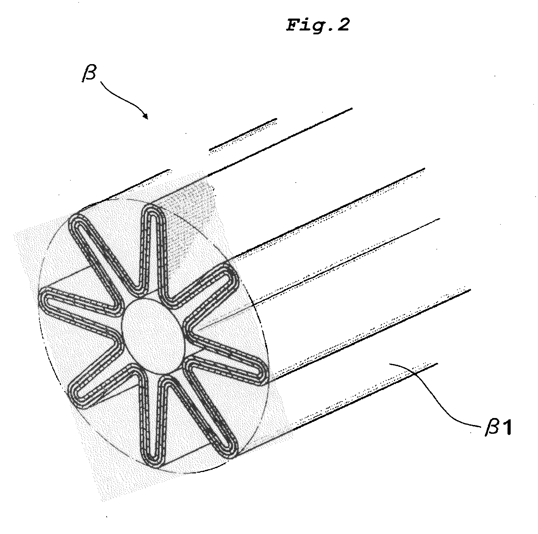

Figure 2 shows a perspective view of another embodiment of the membrane module according to the present embodiment. A membrane module β is a membrane module comprising pleats rolled into a cylindrical shape. In a cross section perpendicular to the central axis of the cylinder, a steam permeable membrane β1 is configured to radiate from the center and therefore has an increased contact area and is efficient.

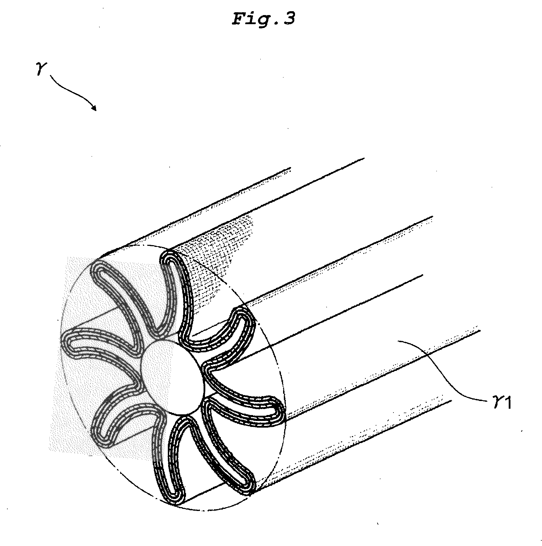

Figure 3 shows a perspective view of another embodiment of the membrane module according to the present embodiment. A membrane module γ is a membrane module comprising pleats rolled into a cylindrical shape, and a steam permeable membrane γ1 is bent (twisted) counterclockwise in the cross section perpendicular to the central axis of the cylinder (spiral configuration) and therefore has an increased contact area and is efficient.

Among the membrane modules described above, the hollow fiber type membrane module whose membrane area per unit volume (specific surface area) is large or the pleated type membrane module whose pressure loss is low is preferable. The hollow fiber type membrane module may be of a type that introduces air to the outer surface side of the hollow fiber and water to the inner surface side of the hollow fiber, or of a type that introduces air to the inner surface side of the hollow fiber and water to the outer surface side of the hollow fiber.

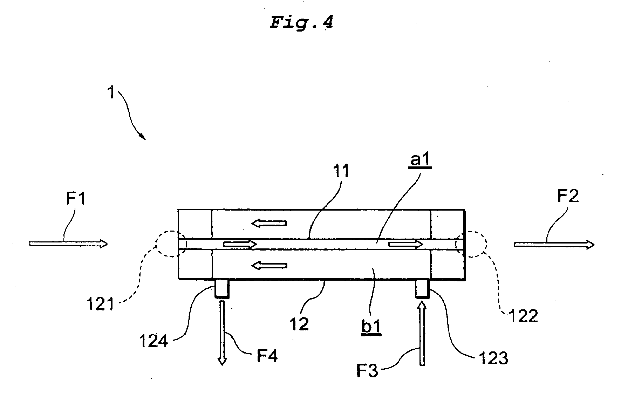

Figure 4 shows a conceptual view of one embodiment of the hollow fiber type membrane module used in the method of reducing a nitrogen oxide in the internal combustion engine according to the present embodiment. A membrane module 1 comprises a steam permeable membrane 11 and a case 12 that houses the steam permeable membrane 11. The membrane module 1 is a tubular hollow fiber type membrane module and incorporates the steam permeable membrane 11, which is the hollow fiber membrane. The case 12 has an air supply port 121, an air discharge port 122, a water supply port 123 and a water discharge port 124. The case 12 has a first section a1 and a second section b1 separated from each other by the steam permeable membrane 11. In the case of the hollow fiber membrane module, the first section a1 is formed on the inner side of the membrane (steam permeable membrane 11), and the second section b1 is formed on the outer side of the membrane. The first section a1 is an air region through which air to be treated flows, and the second section b1 is a water region through which water flows.

Air is supplied to the steam permeable membrane 11 through the air supply port 121 (see the arrow F1), and moisturized air is discharged through the air discharge port 122 (see the arrow F2). At the same time, water for moisturizing the air is supplied into the case 12 through the water supply port 123 (see the arrow F3) and then discharged to the outside of the case through the water discharge port 124 (see the arrow F4). In Figure 4, the air supply port 121, the air discharge port 122, the water supply port 123 and the water discharge port 124 of the membrane module 1 are arranged so that air and water flow in the opposite directions. Although the membrane module 1 is shown as having one air supply port 121, one air discharge port 122, one water supply port 123 and one water discharge port 124, these ports may be provided in larger numbers as required in the present embodiment.
For example, from the viewpoint of the flow rate of air or the efficiency of moisturization of air, two or more air supply ports 121, two or more air discharge ports 122, two or more water supply ports 123 and two or more water discharge ports 124 may also be provided.

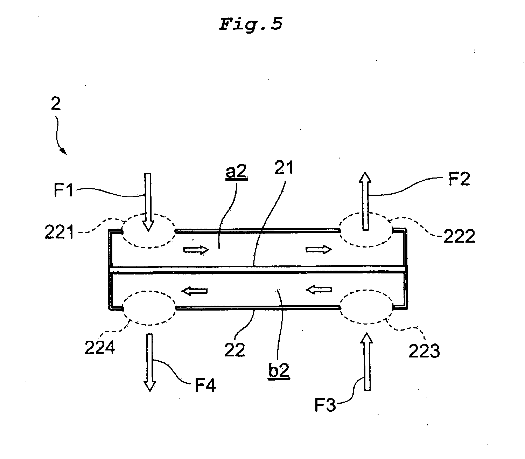

Figure 5 shows a conceptual view of one embodiment of the flat membrane type membrane module used in the method of reducing the nitrogen oxide in the internal combustion engine according to the present embodiment. In the following, things common to those described above with reference to Figure 4 will not be further described, and differences from Figure 4 will be mainly described. A membrane module 2 comprises a steam permeable membrane 21 and a case 22 that houses the steam permeable membrane 21. The membrane module 2 is a box-shaped membrane module and incorporates the steam permeable membrane 21, which is the flat membrane. The case 22 has an air supply port 221, an air discharge port 222, a water supply port 223 and a water discharge port 224. The case 22 has a first section a2 and a second section b2 separated from each other by the steam permeable membrane 21. In the case of the box-shaped membrane module, the first section a2 is formed on the side of one surface (upper side in Figure 5) of the flat membrane (steam permeable membrane 21), and the second section b2 is formed on the side of the other surface (lower side in Figure 5) of the flat membrane. The first section a2 is an air region through which air to be treated flows, and the second section b2 is a water region through which water flows.

Air is supplied to the steam permeable membrane 21 through the air supply port 221 (see the arrow F1), and moisturized air is discharged through the air discharge port 222 (see the arrow F2). At the same time, water for moisturizing the air is supplied into the case 22 through the water supply port 223 (see the arrow F3) and then discharged to the outside of the case 22 through the water discharge port 224 (see the arrow F4). In Figure 5, air and water flow in the opposite directions.

Although the membrane modules having a steam permeable membrane as the membrane have been described as an example with reference to Figures 4 and 5, the kind and structure of the membrane may be chosen depending on the use conditions or use environment in the present embodiment.

In the present embodiment, the water supply part supplies water to the water supply port of the membrane module. The water supply part is not particularly limited, and any well-known water supply part that can supply water to the water supply port of the membrane module may be used. For example, a method of supplying water to the water supply port of the membrane module from a water tank may be used. Water is preferably compressed at a pressure higher than the pressure on the side where air flows (air side). If water is compressed at a pressure higher than the pressure on the air side, air can be prevented from permeating through the membrane from the air side to the side where water flows (circulating water side) to prevent a decrease of the amount of supply air. For example, the method of compressing water and introducing the compressed water to the water supply port may be a method of introducing water or steam with a compressor pump installed at the front of the water supply port or at the rear of the water discharge port. Alternatively, the second section (air region) of the membrane module described above may be decompressed to introduce water into the second section through the water supply port. A specific example of this approach is to introduce water into the second section with a self-contained pump or ejector installed at the rear of the water discharge port.

The water supply part preferably has a liquid feeding part that supplies the water discharged through the water discharge port of the membrane module to the water supply port of the membrane module again. With this arrangement, the water supplied to the membrane module can be circulated to save water. For example, water or steam can be circulated by connecting at least two openings of the second section of the membrane module to a water tank with one of the openings being connected to the water tank via a water supply apparatus. In the case where the second section has two openings, one opening can be connected to the water tank via the water supply pump, and the other opening can be connected directly to the water tank, for example. In the case where the second section has a plurality of openings, a plurality of openings can be connected to the water tank via the water supply pump, and the remaining openings can be connected directly to the water tank, for example. With such a structure, water or steam can be circulated because a path of water or steam is formed along which the water or steam is supplied from the water tank to the membrane module via the water supply apparatus, discharged through the water discharge port and then fed back to the water tank. In the case of steam, the exhaust gas may be used as the carrier, and the exhaust gas discharged from the internal combustion engine can be introduced into the path of the steam.

In the case where water is circulated, salts are accumulated in the circulating water as a result of moisturization, so that the circulating water is preferably intermittently or continuously discharged (blow down) to maintain a constant salt concentration.
In the case where water is not circulated, if the water discharged from the membrane module has thermal energy that can be recovered, the thermal energy is preferably recovered with a heat exchanger.

In the present embodiment, the air moisturized in the membrane module is preferably compressed with an air compressing part before being supplied to the combustion chamber of the internal combustion engine. The air compressing part is not particularly limited as far as the air compressing part can supply air to the combustion chamber of the internal combustion engine, and air can be compressed with a supercharger or a blower. Specific examples of the air compressing part include a compressor and a turbine pump. In particular, a supercharger of the internal combustion engine is preferably used. The "supercharger" refers to an apparatus that compresses air and forcedly feeds the compressed air to the internal combustion engine, and any supercharger of any kind may be used. For example, a turbo charger, a supercharger, a Lysholm compressor or a pressure wave supercharger may be used. The air moisturized in the membrane module is introduced to an air inlet of the supercharger and compressed by the supercharger, and then the compressed moisturized air is supplied to the internal combustion engine. Alternatively, the air moisturized in the membrane module may be adjusted in temperature before being compressed in the manner described above. If the moisturized air is heated in the temperature adjustment, condensation of the moisturized air can be effectively prevented.

In the present embodiment, a temperature controlling part that controls the temperature of water and/or a flow rate controlling part that controls the flow rate of water are preferably provided. The water temperature controlling part or the water flow rate controlling part connected to the water tank or the water supply apparatus can control the temperature or flow rate of water to be a preferred condition. The structure and the like are not particularly limited, and a water temperature controlling part that heats or cools water based on the water temperature measured with a water temperature monitor and a flow rate controlling part that adjusts the flow rate of water based on the flow rate measured with a flow rate monitor can be provided, for example. The temperature and flow rate of the water is preferably automatically controlled by monitoring the water in real time with the water temperature monitor and the flow rate monitor. Furthermore, when the water is heated, the exhaust heat of the internal combustion engine is preferably used to heat the water. The exhaust heat can be recovered from the exhaust gas or engine oil discharged from the internal combustion engine.

In the case where the water supplied to the apparatus for reducing the nitrogen oxide according to the present embodiment is heated, the waste heat of the internal combustion engine is preferably recovered with a heat exchanger and effectively used. The apparatus according to the present embodiment can have a pre-filter for removing dust from the air as a preprocessing that is provided before the membrane module.

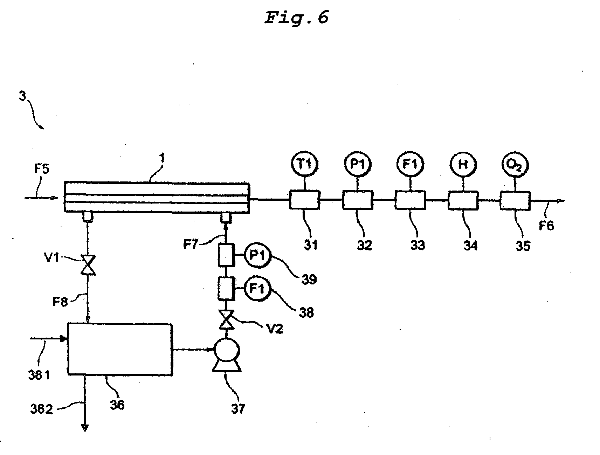

Figure 6 shows a conceptual view of one embodiment of the apparatus for reducing a nitrogen oxide in the internal combustion engine according to the present embodiment. An apparatus 3 for reducing a nitrogen oxide comprises the hollow fiber type membrane module 1. Air at a pressure equal to or lower than atmospheric pressure is supplied to the air supply port (see Figure 4) of the membrane module 1 as shown by the arrow F5. A thermometer 31, a pressure gauge 32, a flowmeter 33, a hygrometer 34 and an oxygen analyzer 35 are connected to the air discharge port (see Figure 4) of the membrane module 1. Furthermore, a hot water bath 36, a circulating water pump 37, a circulating water flowmeter 38 and a circulating water pressure gauge 39 are connected between the water supply port (see Figure 4) and the water discharge port (see Figure 4) of the membrane module 1.

The hot water bath 36 is preferably provided with a thermometer and a heater as a temperature controlling part that controls the temperature of water. The temperature controlling part allows control of the temperature of water (circulating water). Furthermore, the circulating water pump 37, the circulating water flowmeter 38 and the circulating water pressure gauge 39 provided as a flow rate controlling part that controls the flow rate of water allows control of the amount of water passed through the membrane module 1. As a result, NOx can be more effectively reduced. A water supply pipe 361 and a water discharge pipe 362 are connected to the hot water bath. An amount of water equal to the amount of water consumed for moisturization is supplied through the water supply pipe 361. The water usually contains salts and other water-soluble or water-dispersible impurities, and the concentrations of the salts and other water-soluble or water-dispersible impurities in the circulating water increase as the water is supplied for moisturization. In order to keep the concentrations of these constituents constant, the circulating water is preferably continuously or regularly discharged (blow down) through the water discharge pipe 362.

From the viewpoint of optimally controlling the oxygen concentration and humidity of the supply air supplied to the internal combustion engine in accordance with the load on the internal combustion engine in operation, the pressure and flow rate of the circulating water are preferably controlled with valves V1 and V2. Alternatively, the circulating water pump 37 may be controlled with an inverter or the like.

The air at a pressure equal to or lower than atmospheric pressure can be supplied to the membrane module 1 as shown by the arrow F5, and moisturized air can be taken out as shown by the arrow F6. The circulating water pump 37 feeds hot water stored in the hot water bath 36 to the membrane module 1 as shown by the arrow F7 and makes the water circulate as shown by the arrow F8.

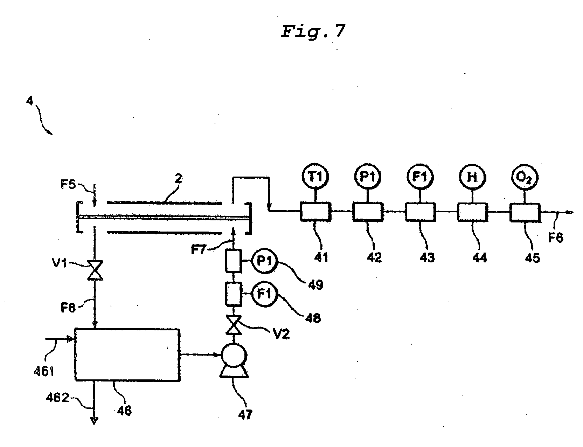

Figure 7 shows a conceptual view of another embodiment of the apparatus for reducing a nitrogen oxide in the internal combustion engine according to the present embodiment. An apparatus 4 for reducing a nitrogen oxide comprises the flat membrane type membrane module 2 (see Figure 5). Air is supplied to the air supply port (see Figure 5) of the membrane module 2 as shown by the arrow F5. A thermometer 41, a pressure gauge 42, a flowmeter 43, a hygrometer 44 and an oxygen analyzer 45 are connected to the air discharge port (see Figure 5) of the membrane module 2. Furthermore, a hot water bath 46, a circulating water pump 47, a circulating water flowmeter 48 and a circulating water pressure gauge 49 are connected between the water supply port (see Figure 5) and the water discharge port (see Figure 5) of the membrane module 2.

The air at a pressure equal to or lower than atmospheric pressure can be supplied to the membrane module 2 as shown by the arrow F5, and moisturized air can be taken out as shown by the arrow F6. The circulating water pump 47 feeds hot water stored in the hot water bath 46 to the membrane module 2 as shown by the arrow F7 and makes the water circulate as shown by the arrow F8. A water supply pipe 461 and a water discharge pipe 462 are connected to the hot water bath, as with the membrane module 2 described above with reference to Figure 6.

In order to optimally control the humidity of intake air in accordance with the load on the internal combustion engine, the pressure and flow rate of the circulating water can be controlled with valves V1 and V2. Alternatively, the circulating water pump 47 may be controlled with an inverter. The temperature of the circulating water can be controlled by the hot water bath 46.

The amount of air supplied to the internal combustion engine is preferably controlled to provide a desired ratio of the amount of air supplied to the internal combustion engine to the amount of fuel supplied to the internal combustion engine. The ratio of the water (steam) in the supply water to the fuel (water-fuel ratio) is preferably controlled to be a desired value. The "water-fuel ratio" referred to herein means the ratio of the rate (g/s) of supply of the water content in the supplied intake air to the rate (g/s) of supply of the fuel to the engine. Specifically, the water-fuel ratio is preferably equal to or higher than 1 or more preferably equal to or higher than 1.1.

An internal combustion engine system according to the present embodiment comprises the apparatus for reducing the nitrogen oxide described above and an internal combustion engine, and the air compressing part of the apparatus for reducing the nitrogen oxide is disposed between the air discharge port of the membrane module and the internal combustion engine. With such a structure, the moisturized air produced by the apparatus for reducing the nitrogen oxide can be compressed before being fed to the internal combustion engine.

The internal combustion engine is not limited to a particular type and can be a diesel engine, for example. Any diesel engine for any use can be used, such as those used as power sources of ships, vehicles, electric generators, airplanes, trains, various kinds of heavy equipment and turbines. Among internal combustion engines, the diesel engine is superior in thermal efficiency and can use not only common fuels, such as light oil and heavy oil, but also various other kinds of liquid fuels and therefore is highly versatile. The fact that the content of NOx in the exhaust gas of the diesel engine can be reduced is significant from the environmental point of view. In the present embodiment, the water used for moisturization can contain salts, such as sodium chloride, and other impurities. Therefore, the present embodiment can be applied to diesel engines for ships and the like that can readily take in seawater or the like. Examples of the diesel engine suitable for the present embodiment may include a two-stroke low-speed engine, a four-stroke medium-speed engine and a four-stroke high-speed engine.

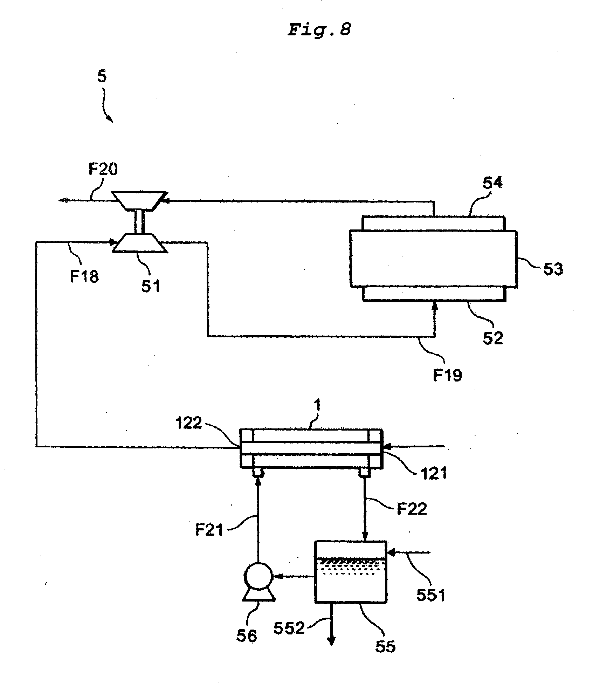

Figure 8 shows a conceptual view of one embodiment of the internal combustion engine system according to the present embodiment. An internal combustion engine system 5 comprises a supercharger of an internal combustion engine and a combustion chamber of the internal combustion engine, and the apparatus for reducing the nitrogen oxide described above is installed before (upstream of) the supercharger. The internal combustion engine 5 has the membrane module 1 described above, and a supercharger (turbocharger) 51 takes air in and can more efficiently supply air at a pressure equal to or lower than atmospheric pressure to the air supply port 121 of the membrane module 1. The air at a pressure equal to or lower than atmospheric pressure passes through the membrane module 1 and exits from the air discharge port 122 in the form of moisturized air. The air discharge port 122, which is the port through which the moisturized air is discharged, is connected to the supercharger 51. An air discharge port of the supercharger 51 is connected to a combustion chamber 53 of the internal combustion engine that has an intercooler (not shown), an intake manifold 52 and an exhaust manifold 54. The air supplied to the supercharger 51 as shown by the arrow F18 is compressed by the supercharger 51, adjusted in temperature (typically cooled) by the intercooler to have a predetermined temperature, and then supplied to the combustion chamber 53 of the internal combustion engine through the intake manifold 52. Then, the exhaust gas is discharged to the outside of the system through the exhaust manifold 54 (see the arrow F20). The water used for moisturization is hot water supplied from a hot water bath 55 to the membrane 1 by the action of a circulating water pump 56 (see the arrow F21) and circulates in the system (see the arrow F22). With such a system structure, sufficiently moisturized air can be fed to the internal combustion engine without the need of compressing air before moisturization. The internal combustion engine system according to the present embodiment can have any structure that includes the arrangement described above and may be appropriately designed in accordance with the application or use environment of the internal combustion engine system.

A water supply pipe 551 and a water discharge pipe 552 are connected to the hot water bath. An amount of water equal to the amount of water consumed for moisturization is supplied through the water supply pipe 551. The water usually contains salts and other water-soluble or water-dispersible impurities, and the concentrations of the salts and other water-soluble or water-dispersible impurities in the circulating water increase as the water is supplied for moisturization. In order to keep the concentrations of these constituents constant, the circulating water is continuously or regularly discharged (blow down) through the water discharge pipe 552.

Although the hollow fiber type membrane module 1 shown in Figure 4 is used as an example of the membrane module in Figure 8, the internal combustion engine system according to the present embodiment is not limited to the structure incorporating the membrane module of this type. For example, the flat membrane type membrane module 2 shown in Figure 5 can also be used instead of the membrane module 1. In addition, not only air of normal oxygen concentration but also air of an oxygen concentration higher or lower than that of the atmosphere may be used as the air supplied through the air supply port 121.

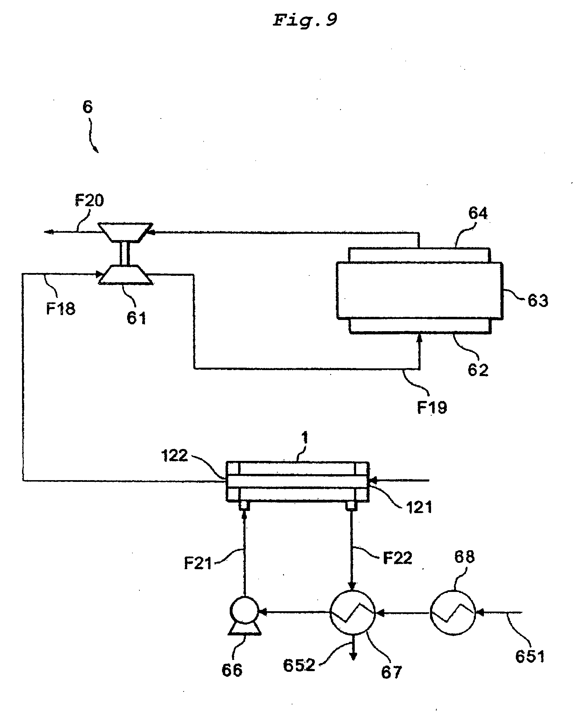

Figure 9 shows a conceptual view of another embodiment of the internal combustion engine system according to the present embodiment. The following description will be focused mainly on differences from Figure 8. An internal combustion engine system 6 has the membrane module 1 described above, and a supercharger 61 takes air in and can more efficiently supply air at a pressure equal to or lower than atmospheric pressure to the air supply port 121 of the membrane module 1. The air at a pressure equal to or lower than atmospheric pressure passes through the membrane module 1 and exits from the air discharge port 122 in the form of moisturized air. The air discharge port 122, which is the port through which the moisturized air is discharged, is connected to the supercharger 61. An intercooler (not shown), an intake manifold 62, a combustion chamber 63 of the internal combustion engine and an exhaust manifold 64 are connected to an air discharge port of the supercharger 61. The air supplied to the supercharger 61 as shown by the arrow F18 is compressed by the supercharger 61 and then supplied to the combustion chamber 63 of the internal combustion engine. Then, the exhaust gas is discharged to the outside of the system through the exhaust manifold 64 (see the arrow F20).

In Figure 9, water is supplied through a water supply pipe 651, raised in temperature to a predetermined temperature by heat exchangers 67 and 68 and then supplied to the membrane module for moisturization (see the arrow F21). The water discharged from the membrane module 1 (see the arrow F22) exchanges heat with the water supplied through the water supply pipe 651 in the heat exchanger 67 and then is discharged to the outside of the system through a water discharge pipe 652. This water supply method is preferably used when water of high salt concentration, such as seawater, is used for moisturization.

The method according to the present embodiment can be conducted in combination with another moisturization method or in a modified manner as required without compromising the advantages of the present embodiment. For example, the method according to the present embodiment can be used in combination with a method of supplying air moisturized by spraying, a method of supplying water/oil type (W/O type) emulsion produced by adding water to the fuel to the engine, or a method of spraying water into cylinders, for example. Furthermore, without compromising the advantages of the present embodiment, the method according to the present embodiment may be used in combination with another method of reducing NOx, such as a method of feeding the exhaust gas back to the supply air (the exhaust gas can be fed back to the supply air on the upstream side (air supply side) or downstream side (moisturized air supply side) of the apparatus according to the present embodiment) and a method of post-processing the exhaust gas. The method according to the present embodiment facilitates control of the amount of steam in the air or the temperature of the air and therefore may be used in combination with various other methods.

### Examples

According to Examples below, the present invention will be described more in detail, but the present invention will not be limited by Examples below.

### [Example 1]

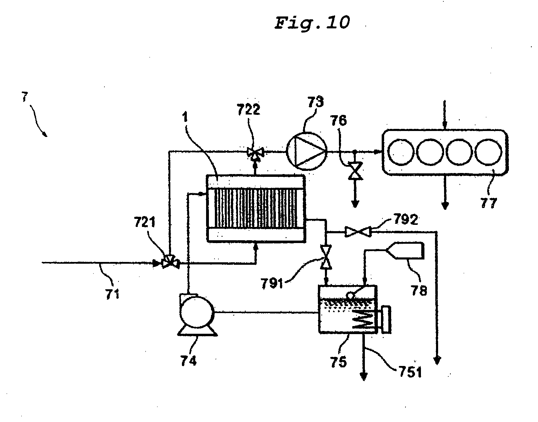

In operation of an internal combustion engine system 7 shown in Figure 10, the NOx concentration of the exhaust gas was measured, and the amount of moisturization of the air supplied to the internal combustion engine and the amount of the generated NOx was investigated. The internal combustion engine system 7 comprises an air supply pipe 71, three-way valves 721 and 723, a compressor (supercharger) 73, an intercooler (not shown), a circulating water pump 74, a hot water producer 75, the membrane module 1 (see Figure 4), a sampling valve 76 and a diesel engine 77 connected to each other.

The membrane module 1 is a hollow fiber type membrane module. A membrane element fitted to the membrane module 1 was fabricated by winding, around a core bar by cheese winding, a hollow fiber ultrafiltration membrane (UF membrane) made of polyether sulfone having an inner diameter of 0.7 mm and an outer diameter of 1.0 mm serving as a support layer whose outer surface was coated with "Teflon (registered trademark) AF 1600" (manufactured by Du Pont), which is a fluorine-based resin, that forms a steam permeable membrane having a thickness of 1 µm or less. The membrane element has a cylindrical shape having a membrane area 10 m², an outer diameter of 175 mm and a length of 430 mm, and four membrane elements were used. The water absorption of the steam permeable membrane described above was 0.01% or less, and the water contact angle was 104°. The water absorption was measured according to ASTM D570 under the condition that a sample was immersed in water at 23°C for 24 hours. The water contact angle was measured with a contact angle measuring apparatus (CA-X150 contact angle meter manufactured by Kyowa Interface Science Co., LTD.) after a drop of deionized water put on the surface of the sample was left at 23°C for one minute.

The specifications of the diesel engine was as follows: the rated speed was 2400 rpm (under 100% load), the output power was 103 kW, the bore was 110 mm, the stroke was 125 mm, Pme was 1.08 Mpa, and light oil was used. The engine was operated according to E3 test cycle prescribed in "Technical Code on Control of Emission of Nitrogen Oxides from Marine Diesel Engines 2008" (Nippon Kaiji Kyokai). The engine was operated with an engine load factor of 75% and a supply air pressure of 65 kPaG.

Air was supplied to the inner side of the membrane module 1 (through the air supply port) via the three-way valve 721 through the air supply pipe 71 and moisturized in the membrane module 1. Then, the moisturized air passes through the three-way valve 722, is compressed by the compressor (supercharger) 73 and then supplied to the diesel engine 77. Water is supplied from a water source 78 to the hot water producer 75 and heated to be hot water, which is supplied to the outer side of the membrane module 1 (through the water supply port) via the circulating water pump 74 to moisturize the air through the steam permeable membrane. The remainder of the water is fed back to the hot water producer 75 via a valve 791. If the concentrations of salts or other impurities in the water increase, the water is discharged to the outside of the system through a water discharge pipe 751 connected to the hot water producer 75. A valve 792 serves as a safety valve when the pressure of the air or water becomes too high.

In Example 1, tap water was used as the circulating water. The pressure of the air at the air supply port of the membrane module 1 was 0 kPaG (gauge pressure), the temperature was 25°C, and the oxygen concentration was 20.9%. The oxygen concentration was measured with an oxygen monitor ("JKO-25LJII" manufactured by JIKCO Ltd.).

The pressure of the air at the air supply port of the membrane module 1 was set at atmospheric pressure, the pressure of the air at the air discharge port was set at -2 kPaG (gauge pressure), and the temperature of the water at the water supply port of the membrane module 1 was set at 51°C. To prevent the air from permeating through the steam permeable membrane, the pressure of the water at the water supply port of the membrane module 1 was set at 20 kPaG (gauge pressure). The temperature of the moisturized air discharged from the membrane module 1 was 46.5°C, and the relative humidity of the same was 85%. The result of the experiment showed that the amount of NOx generated was 3.72g/kWh. In this experiment, no corrosion of the diesel engine was recognized.

### [Example 2]

The same experiment as in Example 1 was conducted except that the humidity and relative humidity of the supply air used were changed to the values shown in Table 1, and the supply air pressure was changed to 80 kPaG. The result is shown in Table 1.

### [Example 3]

An internal combustion engine system was operated which was the internal combustion engine system in Example 1 in which the membrane module 1 was replaced with the flat membrane type membrane module described below. A polyethylene microporous membrane (having a mode diameter of 90 nm measured with a mercury porosimeter) was used as the support layer. The steam permeable membrane was fabricated by cutting the polyethylene microporous membrane to a width of 300 mm and coating one surface of the polyethylene microporous membrane with "Teflon (registered trademark) AF 1600" (manufactured by Du Pont) to a thickness of 1 µm or less with a microgravure coater (manufactured by Yasui Seiki Co., Ltd.).

Then, two spacers was prepared, the steam permeable membrane was placed between the two spacers, pleating of the steam permeable membrane was conducted to form pleats having a height of 40 mm with a pleating machine, and then, the resulting pleated steam permeable membrane was cut to a width of 120 mm to produce a pleated laminate having 450 pleats (having a length of about 380 mm). The edges of the pleated laminate were bonded with an epoxy resin to form the membrane element. The spacers were plain weave fabric made of polyester strands of threads having a diameter of about 126 µm with the intersections of the strands being secured by heat sealing and had a thickness of 183 µm, an opening (strand-to-strand distance) of 1 mm, and a width of 300 mm. The membrane element was fitted to the membrane module to form the flat membrane type membrane module. The internal combustion engine system was operated under the conditions that this flat membrane type membrane module was used, and the temperature of the water at the water supply port of the membrane module 1 was set at 51°C. In other respects, the internal combustion engine system was operated in the same manner as in Example 1 by adjusting the temperature and flow rate of the water under the conditions shown in Table 1.

### [Example 4]

The same experiment as in Example 3 was conducted except that the temperature and relative humidity of the supply air were changed to the values shown in Table 1, and the supply air pressure was changed to 80 kPaG. The result is shown in Table 1.

### [Comparative Example 1]

The same internal combustion engine system as that in Example 1 was operated. In this example, by adjusting the three-way valve 721 and 722, air from the compressor 73 is directly supplied to the diesel engine 77 without passing through the membrane module 1. The result of the experiment showed that the amount of NOx generated was 13.26 g/kWh.

### [Comparative Example 2]

The membrane module 1 was placed between the compressor 73 and the diesel engine 77. The same internal combustion engine system as that in Example 1 was used except that the compressor 73 was connected to the air supply port of the membrane module 1, and the air discharge port of the membrane module 1 was connected to the diesel engine 77. In Comparative Example 2, the pressure of the air at the air supply port of the membrane module 1 was 65 kPaG, and an experiment was conducted in which air compressed to a pressure higher than atmospheric pressure moisturized was introduced into the internal combustion engine. When water is flowed under the same conditions as those in Example 1, the air was insufficiently moisturized.

### [Comparative Example 3]

The membrane module 1 was placed between the compressor 73 and the diesel engine 77. The same internal combustion engine system as that in Example 3 was used except that the compressor 73 was connected to the air supply port of the membrane module 1, and the air discharge port of the membrane module 1 was connected to the diesel engine 77. In Comparative Example 3, the pressure of the air at the air supply port of the membrane module 1 was 65 kPaG, and an experiment was conducted in which air compressed to a pressure higher than atmospheric pressure moisturized was introduced into the internal combustion engine. When water is flowed under the same conditions as those in Example 2, the air was insufficiently moisturized.

Table 1 shows the results of Examples 1 to 4 and Comparative Example 1. In the table, the "oxygen excess ratio" means the ratio (magnification) of the amount of oxygen in the supplied intake air to the amount of oxygen required for combustion of the fuel. The "water/fuel ratio" means the ratio of the rate (g/s) of supply of the water content in the supplied intake air to the rate (g/s) of supply of the fuel supplied to the engine. The "supply air temperature" means the temperature of the moisturized air supplied to the engine.

**[Table 1]**

| | Supply air | | Oxygen excess ratio λ | Water/fuel ratio ((g/s)/(g/s)) | Amount of generated NOx in engine exhaust gas (g/kWh) |
|---|---|---|---|---|---|
| | Temperature (°C) | Relative humidity (%) | | | |
| Example 1 | 46.5 | 85.0 | 2.20 | 1.1 | 3.72 |
| Example 2 | 50.0 | 90.0 | 2.00 | 1.8 | 3.05 |
| Example 3 | 49.9 | 78.2 | 2.00 | 1.3 | 3.24 |
| Example 4 | 50.8 | 90.0 | 2.00 | 1.9 | 2.93 |
| Comparative Example 1 | 35.0 | 20.6 | 2.30 | 0.16 | 13.26 |

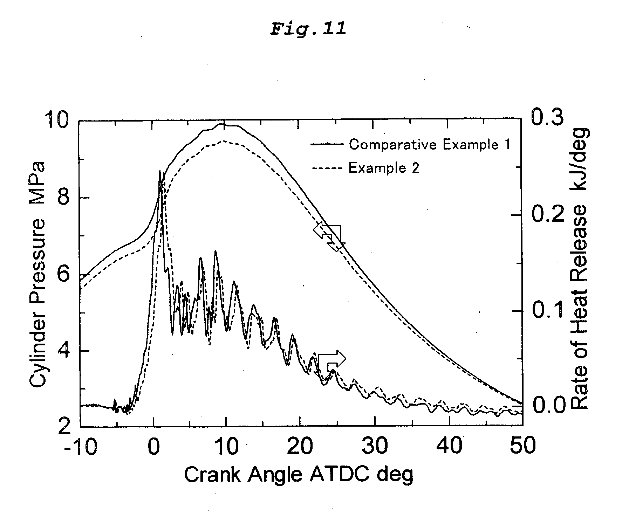

Next, to investigate the progress of the combustion in the internal combustion engine in further detail, phenomena in a cylinder in Example 2 and Comparative Example 1 were further investigated. Figure 11 shows a graph of a pressure diagram for a cylinder in Example 2 and Comparative Example 1 with a heat release rate curve plotted thereon. The rate of heat release was calculated from an average of the pressure diagram over 150 cycles at crank angle intervals of 0.1° under the respective experimental conditions. The combustion analysis was conducted with "DS-200 series combustion analysis system" manufactured by ONO SOKKI CO/ LTD. (using "DS-0228 steady combustion analysis software").

In Comparative Example 1, in which moisturization did not occur, the average value of the compression pressure (in-cylinder pressure) was about 6.8 MPa, and the maximum value of the compression pressure was 9.9 MPa. In Example 2, in which moisturization occurred, the average value of the compression pressure (in-cylinder pressure) was about 6.5 MPa, and the maximum value of the compression pressure was about 9.5 MPa. However, the difference in ignition delay was small. The reason why the compression pressure and the maximum pressure were lower in Example 2 than in Comparative Example 1 was probably because the specific heat of the working fluid in Example 2 had increased because of the moisturization. As the specific heat increases, the compression temperature decreases, and the compression pressure also decreases. Furthermore, the reason why the maximum pressure decreased after ignition is because the heat release decreased after ignition, and thus, it can be said that occurrence of NOx was considerably reduced. Although the expansion work (positive work done) per cycle decreases in accordance with the decrease of the maximum pressure, the compression work (negative work done) decreases because of the decrease of the compression pressure, so that the fuel consumption did not significantly increase. Therefore, NOx can be reduced without causing deterioration of fuel consumption by making good use of the result of Example 2.

In other words, it can be considered that although the specific heat of the working fluid increased because of the moisturization, and therefore the temperature increase caused by combustion was reduced, the maximum pressure decreased, and the expansion work (positive work) decreased, the compression work (negative work) also decreased because the temperature increase caused by compression was also reduced, and the two effects cancelled each other, so that the fuel consumption did not significantly change. To increase the specific heat of the working fluid by moisturization is effective for reducing the compression work (negative work) of the engine, and the efficiency of extraction of expansion work (positive work) after ignition can possibly be improved with a spray combustion technique. Although it is generally said that there is a tradeoff between fuel consumption and NOx generation in the method of reducing NOx (EGR, NEM, water spraying or the like) by combustion control that involves decreasing the maximum combustion temperature, the tradeoff curve can be improved by increasing the specific heat of the working fluid by moisturization.

From the above description, it has been confirmed that, in the examples described above, nitrogen oxides in the exhaust gas of the internal combustion engine was able to be effectively reduced in a simple manner.

The present application is based on a Japanese patent application (Japanese Patent Application No. 2010-187671), filed with Japan Patent Office on August 24, 2010.

### Industrial Applicability

The method of reducing the nitrogen oxide in the internal combustion engine, the apparatus for reducing the nitrogen oxide in the internal combustion engine and the internal combustion engine system according to the present invention have wide variety of applications including marine or vehicle diesel engines.

### Reference Signs List

α, β, γ, 1, 2 ... membrane module, α1, β1, γ1, 11, 21 ... steam permeable membrane, 12, 22 ... case, 121, 221 ... air supply port, 122, 222 ... air discharge port, 123, 223 ... water supply port, 124, 224 ... water discharge port, 3, 4 ... apparatus for reducing nitrogen oxide, 31, 41 ... thermometer, 32, 42 ... pressure gauge, 33, 43 ... flowmeter, 34, 44 ... hygrometer, 35, 45 ... oxygen analyzer, 36, 46, 55 ... hot water bath, 361, 461, 551, 651 ... water supply pipe, 362, 462, 552, 652, 751 ... water discharge pipe, 37, 47, 56, 66, 74 ... circulating water pump, 38, 48 ... circulating water flowmeter, 39, 49 ... circulating water pressure gauge, 5, 6, 7 ... internal combustion engine system, 51, 61 ... supercharger, 52, 62 ... intake manifold, 53, 63 ... combustion chamber of internal combustion engine, 54, 64 ... exhaust manifold, 71 ... air supply pipe, 721, 722 ... three-way valve, 73, 81 ... compressor, 75 ... hot water producer, 76 ... sampling valve, 77 ... diesel engine, 78 ... water source, 67, 68 ... heat exchanger, V1, V2, 791, 792 ... valve, a1, a2 ... first section, b1, b2 ... second section.

## Claims

1. A method of reducing a nitrogen oxide in an exhaust gas of an internal combustion engine (77), the method comprising:
a step of moisturizing air at a pressure equal to or lower than atmospheric pressure by bringing the air into contact with one surface of a steam permeable membrane (α1, β1, γ1, 11, 21) while flowing liquid water along the other surface of the steam permeable membrane, wherein the direction of the flow of the water is opposite to the direction of the flow of the air; and
a step of introducing the moisturized air into the internal combustion engine.

2. The method of reducing the nitrogen oxide according to claim 1, wherein in the step of introducing the moisturized air into the internal combustion engine, the moisturized air is compressed and introduced into the internal combustion engine.

3. The method of reducing the nitrogen oxide according to claim 1 or 2, wherein in the step of moisturizing the air, a pressure of the liquid water is equal to or higher than the pressure of the air.

4. The method of reducing the nitrogen oxide according to any one of claims 1 to 3, wherein the steam permeable membrane is a microporous membrane selected from the group consisting of a polyolefin-based microporous membrane, a polysulfone-based microporous membrane, a polyether sulfone-based microporous membrane and a polytetrafluoroethylene-based microporous membrane, and
at least a part of a surface of the microporous membrane is coated with a layer having a thickness of 1 µm or less, the layer containing a perfluoro-(2,2-dimethyl-1,3-dioxole) homopolymer or a copolymer of perfluoro-(2,2-dimethyl-1,3-dioxole) and tetrafluoroethylene.

5. The method of reducing the nitrogen oxide according to any one of claims 1 to 4, wherein the liquid water contains an electrolyte.

6. The method of reducing the nitrogen oxide according to any one of claims 1 to 5, wherein in the step of moisturizing the air, a temperature of the liquid water is from -10°C to +30°C of a temperature of the air.

7. The method of reducing the nitrogen oxide according to any one of claims 1 to 6, wherein a content of water in the moisturized air is 1 mol% or more, and a humidity of the moisturized air is lower than 100 %RH.

8. An apparatus (3, 4) for reducing a nitrogen oxide, comprising:
a membrane module (α, β, γ, 1, 2) including a steam permeable membrane (α1, β1, γ1, 11, 21) and a case (12, 22) that houses the steam permeable membrane, the case having a first section (a1, a2) and a second section (b1, b2) separated from each other by the steam permeable membrane, and the case having an air supply port (121, 221) for supplying air at a pressure equal to or lower than atmospheric pressure to the first section, an air discharge port (122, 222) for discharging the air from the first section, a water supply port (123, 223) for supplying liquid water to the second section, and a water discharge port (124, 224) for discharging the liquid water from the second section; and
a water supply part (361, 461, 551, 651) connected to the water supply port of the membrane module, wherein the membrane module is configured to direct the flow of the liquid water in the opposite direction of the flow of the air.

9. The apparatus for reducing the nitrogen oxide according to claim 8, the apparatus further comprising:
an air compressing part (51, 61, 73) connected to the air discharge port of the membrane module.

10. The apparatus for reducing the nitrogen oxide according to claim 8 or 9, wherein the steam permeable membrane is a microporous membrane selected from the group consisting of a polyolefin-based microporous membrane, a polysulfone-based microporous membrane, a polyether sulfone-based microporous membrane and a polytetrafluoroethylene-based microporous membrane, and
at least a part of a surface of the microporous membrane is coated with a layer having a thickness of 1 µm or less, the layer containing a copolymer of perfluoro-(2,2-dimethyl-1,3-dioxole) and tetrafluoroethylene.

11. The apparatus for reducing the nitrogen oxide according to any one of claims 8 to 10, wherein the water supply part includes a liquid feeding part (791) that supplies liquid water discharged through the water discharge port of the membrane module to the water supply port of the membrane module again.

12. The apparatus for reducing the nitrogen oxide according to any one of claims 8 to 11, the apparatus further comprising:
a temperature controlling part (36, 46, 55, 67, 68, 75) that controls the temperature of the liquid water; and
a flow rate controlling part (37, 38, 39, 47, 48, 49, 74) that controls the flow rate of the liquid water.

13. An internal combustion engine system (5, 6, 7), comprising:
the apparatus for reducing the nitrogen oxide according to any one of claims 9 to 12; and
an internal combustion engine (77),
wherein the air compressing part (51, 61, 73) is disposed between the air discharge port of the membrane module and the internal combustion engine.

## Patentansprüche

1. Verfahren zur Reduktion eines Stickoxids in einem Abgas eines Verbrennungsmotors (77), wobei das Verfahren Folgendes umfasst:
einen Schritt des Befeuchtens von Luft bei einem Druck, der gleich wie oder geringer als der Luftdruck ist, durch Bringen der Luft in Kontakt mit einer Oberfläche einer dampfdurchlässigen Membran (α1, ß1, y1, 11, 21), während flüssiges Wasser der anderen Oberfläche der dampfdurchlässigen Membran entlang zum Strömen gebracht wird, wobei die Richtung des Wasserstroms der Richtung des Luftstroms entgegengesetzt ist; und
einen Schritt des Einführens der befeuchteten Luft in den Verbrennungsmotor.

2. Verfahren zur Reduktion des Stickoxids nach Anspruch 1, wobei im Schritt des Einführens der befeuchteten Luft in den Verbrennungsmotor die befeuchtete Luft komprimiert und in den Verbrennungsmotor eingeführt wird.

3. Verfahren zur Reduktion des Stickoxids nach Anspruch 1 oder 2, wobei im Schritt des Befeuchtens der Luft ein Druck des flüssigen Wassers gleich wie oder höher als der Druck der Luft ist.

4. Verfahren zur Reduktion des Stickoxids nach einem der Ansprüche 1 bis 3, wobei die dampfdurchlässige Membran eine mikroporöse Membran ist, ausgewählt aus der Gruppe bestehend aus einer mikroporösen Membran auf der Basis von Polyolefin, einer mikroporösen Membran auf der Basis von Polysulfon, einer mikroporösen Membran auf der Basis von Polyethersulfon und einer mikroporösen Membran auf der Basis von Polytetrafluorethylen und
mindestens ein Teil einer Oberfläche der mikroporösen Membran mit einer Schicht beschichtet ist, die eine Dicke von 1 µm oder weniger aufweist, wobei die Schicht ein Perfluor-(2,2-dimethyl-1,3-dioxol)-Homopolymer oder ein Copolymer von Perfluor-(2,2-dimethyl-1,3-dioxol) und Tetrafluorethylen enthält.

5. Verfahren zur Reduktion des Stickoxids nach einem der Ansprüche 1 bis 4, wobei das flüssige Wasser einen Elektrolyt enthält.

6. Verfahren zur Reduktion des Stickoxids nach einem der Ansprüche 1 bis 5, wobei im Schritt des Befeuchtens der Luft eine Temperatur des flüssigen Wassers -10 °C bis +30 °C einer Temperatur der Luft beträgt.

7. Verfahren zur Reduktion des Stickoxids nach einem der Ansprüche 1 bis 6, wobei ein Gehalt an Wasser in der befeuchteten Luft 1 Mol-% oder mehr beträgt und eine Feuchte der befeuchteten Luft geringer als 100 % RF ist.

8. Vorrichtung (3,4) zur Reduktion eines Stickoxids, umfassend:
ein Membranmodul (α, ß, y, 1, 2), das eine dampfdurchlässige Membran (α1, ß1, y1, 11, 21) und ein Gehäuse (12, 22), das die dampfdurchlässige Membran aufnimmt, enthält, wobei das Gehäuse einen ersten Abschnitt (a1, a2) und einen zweiten Abschnitt (b1, b2) aufweist, die voneinander durch die dampfdurchlässige Membran getrennt sind, und das Gehäuse eine Luftzufuhröffnung (121, 221) zum Zuführen von Luft bei einem Druck, der gleich wie oder geringer als der Luftdruck ist, zum ersten Abschnitt, eine Luftablassöffnung (122, 222) zum Ablassen der Luft aus dem ersten Abschnitt, eine Wasserzufuhröffnung (123, 223) zum Zuführen von flüssigem Wasser zu dem zweiten Abschnitt und eine Wasserablassöffnung (124, 224) zum Ablassen des flüssigen Wassers aus dem zweiten Abschnitt aufweist; und
ein Wasserzufuhrteil (361, 461, 551, 651), das mit der Wasserzufuhröffnung des Membranmoduls verbunden ist, wobei das Membranmodul konfiguriert ist, um den Strom des flüssigen Wassers in der entgegengesetzten Richtung zum Luftstrom zu leiten.

9. Vorrichtung zur Reduktion des Stickoxids nach Anspruch 8, wobei die Vorrichtung ferner Folgendes umfasst:
ein Luftkomprimierteil (51, 61, 73), das mit der Luftablassöffnung des Membranmoduls verbunden ist.

10. Vorrichtung zur Reduktion des Stickoxids nach Anspruch 8 oder 9, wobei die dampfdurchlässige Membran eine mikroporöse Membran ist, ausgewählt aus der Gruppe bestehend aus einer mikroporösen Membran auf der Basis von Polyolefin, einer mikroporösen Membran auf der Basis von Polysulfon, einer mikroporösen Membran auf der Basis von Polyethersulfon und einer mikroporösen Membran auf der Basis von Polytetrafluorethylen und
mindestens ein Teil einer Oberfläche der mikroporösen Membran mit einer Schicht beschichtet ist, die eine Dicke von 1 µm oder weniger aufweist, wobei die Schicht ein Copolymer von Perfluor-(2,2-dimethyl-1,3-dioxol) und Tetrafluorethylen enthält.

11. Vorrichtung zur Reduktion des Stickoxids nach einem der Ansprüche 8 bis 10, wobei das Wasserzufuhrteil ein Flüssigkeitszufuhrteil (791) enthält, das flüssiges Wasser, das durch die Wasserablassöffnung des Membranmoduls abgelassen wird, wieder zu der Wasserzufuhröffnung des Membranmoduls führt.

12. Vorrichtung zur Reduktion des Stickoxids nach einem der Ansprüche 8 bis 11, wobei die Vorrichtung ferner Folgendes umfasst:
ein Temperaturregulierteil (36, 46, 55, 67, 68, 75), das die Temperatur des flüssigen Wassers reguliert; und
ein Strömungsratenregulierteil (37, 38, 39, 47, 48, 49, 74), das die Strömungsrate des flüssigen Wassers reguliert.

13. Verbrennungsmotorsystem (5, 6, 7) umfassend:
die Vorrichtung zur Reduktion des Stickoxids nach einem der Ansprüche 9 bis 12; und
einen Verbrennungsmotor (77),
wobei das Luftkomprimierteil (51, 61, 73) zwischen der Luftablassöffnung des Membranmoduls und dem Verbrennungsmotor angeordnet ist.

## Revendications

1. Procédé de réduction d'un oxyde d'azote dans des gaz d'échappement d'un moteur à combustion interne (77), le procédé comprenant les étapes consistant à :
humidifier l'air à une pression inférieure ou égale à la pression atmosphérique en mettant l'air en contact avec une surface d'une membrane (α1, β1, γ1, 11, 21) perméable à la vapeur tout en faisant couler de l'eau liquide le long de l'autre surface de la membrane perméable à la vapeur, le sens de l'écoulement de l'eau étant contraire au sens de l'écoulement de l'air ; et
introduire l'air humidifié dans le moteur à combustion interne.

2. Procédé de réduction de l'oxyde d'azote selon la revendication 1, dans lequel, dans l'étape d'introduction de l'air humidifié dans le moteur à combustion interne, l'air humidifié est comprimé et introduit dans le moteur à combustion interne.

3. Procédé de réduction de l'oxyde d'azote selon la revendication 1 ou 2, dans lequel, dans l'étape d'humidification de l'air, la pression de l'eau liquide est supérieure ou égale à la pression de l'air.

4. Procédé de réduction de l'oxyde d'azote selon l'une quelconque des revendications 1 à 3, dans lequel
la membrane perméable à la vapeur est une membrane microporeuse choisie dans le groupe constitué par membrane microporeuse à base de polyoléfine, membrane microporeuse à base de polysulfone, membrane microporeuse à base de polyéthersulfone et membrane microporeuse à base de polytétrafluoréthylène, et
au moins une partie d'une surface de la membrane microporeuse est revêtue d'une couche d'une épaisseur de 1 µm ou moins, la couche contenant un perfluoro-(2,2-diméthyl-1,3-dioxole) homopolymère ou un copolymère de perfluoro-(2,2-diméthyl-1,3-dioxole) et de tétrafluoroéthène.

5. Procédé de réduction de l'oxyde d'azote selon l'une quelconque des revendications 1 à 4, dans lequel l'eau liquide contient un électrolyte.

6. Procédé de réduction de l'oxyde d'azote selon l'une quelconque des revendications 1 à 5, dans lequel, dans l'étape d'humidification de l'air, la température de l'eau liquide est dans une plage allant de -10°C à +30°C par rapport à la température de l'air.

7. Procédé de réduction de l'oxyde d'azote selon l'une quelconque des revendications 1 à 6, dans lequel la teneur en eau de l'air humidifié est d'au moins 1% en moles et l'humidité relative de l'air humidifié est inférieure à 100%.

8. Appareil (3, 4) pour réduire un oxyde d'azote, comprenant :
un module (α, β, γ, 1, 2) à membrane comprenant une membrane perméable à la vapeur (αl, β1, γ1, 11, 21) et un boîtier (12, 22) qui abrite la membrane perméable à la vapeur, le boîtier comportant une première section (al, a2) et une seconde section (b1, b2) séparées l'une de l'autre par la membrane perméable à la vapeur et le boîtier comportant un orifice d'alimentation en air (121, 221) pour alimenter la première section en air à une pression inférieure ou égale à la pression atmosphérique, un orifice d'évacuation d'air (122, 222) pour évacuer l'air de la première section, un orifice d'alimentation en eau (123, 223) pour alimenter la seconde section en eau liquide et un orifice d'évacuation d'eau (124, 224) pour évacuer l'eau liquide de la seconde section ; et
un composant (361, 461, 551, 651) d'alimentation en eau raccordé à l'orifice d'alimentation en eau du module à membrane, dans lequel le module à membrane est configuré pour diriger l'écoulement de l'eau liquide dans le sens inverse de la circulation de l'air.

9. Appareil pour réduire l'oxyde d'azote selon la revendication 8, l'appareil comprenant en outre un composant (51, 61, 73) de compression d'air raccordé à l'orifice d'évacuation d'air du module à membrane.

10. Appareil pour réduire l'oxyde d'azote selon la revendication 8 ou 9, dans lequel la membrane perméable à la vapeur est une membrane microporeuse choisie dans le groupe constitué par membrane microporeuse à base de polyoléfine, membrane microporeuse à base de polysulfone, membrane microporeuse à base de polyéthersulfone et membrane microporeuse à base de polytétrafluoréthylène, et
au moins une partie d'une surface de la membrane microporeuse est revêtue d'une couche d'une épaisseur de 1 µm ou moins, la couche contenant un copolymère de perfluoro-(2,2-diméthyl-1,3-dioxole) et de tétrafluoroéthène.

11. Appareil pour réduire l'oxyde d'azote selon l'une quelconque des revendications 8 à 10, dans lequel le composant d'alimentation en eau comprend un conduit d'alimentation liquide (791) qui recycle l'eau liquide évacuée par l'orifice d'évacuation d'eau du module à membrane vers l'orifice d'alimentation en eau du module à membrane.

12. Appareil pour réduire l'oxyde d'azote selon l'une quelconque des revendications 8 à 11, l'appareil comprenant en outre :
un composant de commande de température (36, 46, 55, 67, 68, 75) qui commande la température de l'eau liquide ; et
un composant de commande de débit (37, 38, 39, 47, 48, 49, 74) qui commande le débit de l'eau liquide.

13. Système (5, 6, 7) de moteur à combustion interne, comprenant :
l'appareil pour réduire l'oxyde d'azote selon l'une quelconque des revendications 9 à 12 ; et
un moteur à combustion interne (77),
dans lequel le composant (51, 61, 73) de compression d'air est disposé entre l'orifice d'évacuation d'air du module à membrane et le moteur à combustion interne.
